Europäisches Patentamt

(19) European Patent Office

Office européen des brevets

(11) Publication number: **0 142 364**
**A2**

# (12) EUROPEAN PATENT APPLICATION

(21) Application number: **84307820.5**

(22) Date of filing: **12.11.84**

(51) Int. Cl.⁴: **C 10 J 3/50**
**B 01 J 8/00**

(30) Priority: **14.11.83 US 551752**

(43) Date of publication of application:
**22.05.85 Bulletin 85/21**

(84) Designated Contracting States:
**BE DE FR GB IT**

(71) Applicant: **KRW Energy Systems Inc.**
**Three Greenway Plaza**
**Houston, Texas 77046(US)**

(72) Inventor: **Stoops, Grace Arlene**
**147 Broadway Drive**
**Pittsburgh Pennsylvania(US)**

(72) Inventor: **Haldipur, Gaurand Bhalchandra**
**1109 Acorn Drive**
**Greensburg Pennsylvania(US)**

(74) Representative: **van Berlyn, Ronald Gilbert**
**23, Centre Heights**
**London, NW3 6JG(GB)**

(54) **Particulate solids conveyance sealing and injection system.**

(57) A solids particulate sealing and injection apparatus comprising a vertical pipe (32) having a lower end, a seal pot (52) attached flowingly to the pipe at the lower end, and an ejector (30) comprising a particulate inlet (32), a motive gas source (34), mixing length (36), a diffuser (38) and an ejector discharge (40); characterized by a sparger ring (54) disposed within the seal pot, a transport gas inlet (56) disposed upwardly through the seal pot, a seal pot outlet (58) disposed upwardly through the seal pot above the transport gas inlet, and particulate conveying means (60) for conveying particulate from the outlet to the particulate inlet.

FIG. 3

EP 0 142 364 A2

Croydon Printing Company Ltd.

1                                                          50,853
PARTICULATE SOLIDS CONVEYANCE
SEALING AND INJECTION SYSTEM

This invention relates to a system and method for transporting particulate solids from a region of low pressure to a region of higher pressure, specifically in a fluidized bed gasification system.

Various chemical processing systems which use some sort of solid particulate material face the problem of conveying the solid particulate material from one point to another. This is generally solved easily where the material must be moved from a point of high pressure to a point of lower pressure merely by a stream of gas which flows from high pressure to low pressure and entrains the particulate in a flowing gas stream. This solution, however, will not work where the particulate must be conveyed across an adverse pressure drop, i.e., from a region of low pressure to a region of high pressure.

One solution has been the use of an eductor in line with a cyclone standpipe. Use of this apparatus allows the higher pressure to be overcome, but if motive gas is lost, there is no seal mechanism to prevent flow reversal.

Another solution has been the use of non-mechanical, or "L", valves. In general, these valves are comprised of a vertical pipe joined flowingly at one end to an end of a horizontal pipe to form an "L". Additionally, a source of fluidizing gas is positioned in the vertical pipe somewhere above the joint. The "L"-valve has the additional advantage of being a passive seal on loss of motive gas.

0231L

0142364
50,853

These devices work well when the particulate material to be conveyed is not wet or sticky and will flow as a dry particulate material. It is also acceptable in steady state conditions when the pressure value of the high pressure region does not vary significantly and when the particulate material is of a relatively uniform and anticipated bulk density and particle size. There are, however, several situations in which this device could become unsatisfactory. If the material to be conveyed is potentially sticky, either because it is wet or because it sinters under high temperature, it is possible that a plug could be formed in the horizontal leg. Further, if the pressure of the high pressure region varies or if the particulate material is of a lower bulk density than expected, further design modifications may be required. In any case, "on line" corrections may be difficult or impossible. It is thus the principal object of the invention to provide a non-mechanical conveyance system which can be used in circumstances where the material to be conveyed is either wet or potentially sticky, which will be operable where the pressure of the high pressure region varies, and where there is a possibility that the particulate material will be of lower bulk density than expected.

With this object in view, the present invention resides in a solids particulate sealing and injection apparatus comprising a vertical pipe having a lower end, a seal pot attached flowingly to the pipe's lower end and an ejector comprising a particulate inlet, a motive gas source, a mixing length, a diffuser and an ejector discharge; characterized by a sparger ring disposed within the seal pot, a transport gas inlet disposed upwardly through the seal pot, a seal pot outlet

0231L

disposed upwardly through the seal pot above the transport gas inlet, and particulate conveying means for conveying particulate from the outlet to the particulate inlet.

The invention will become more readily apparent from the following description of a preferred embodiment thereof, shown by way of example only, in the accompanying drawings in which:

Figure 1 is a functional block diagram of a fluidized bed gasification system;

Figure 2 is a sectional elevational view of a solids eductor in accordance with the state of the art;

Figure 3 is a sectional elevational view of a solids sealing and injection device in accordance with the invention;

Figure 4 is a sectional elevational view of a fluidized bed gasification system in accordance with the invention.

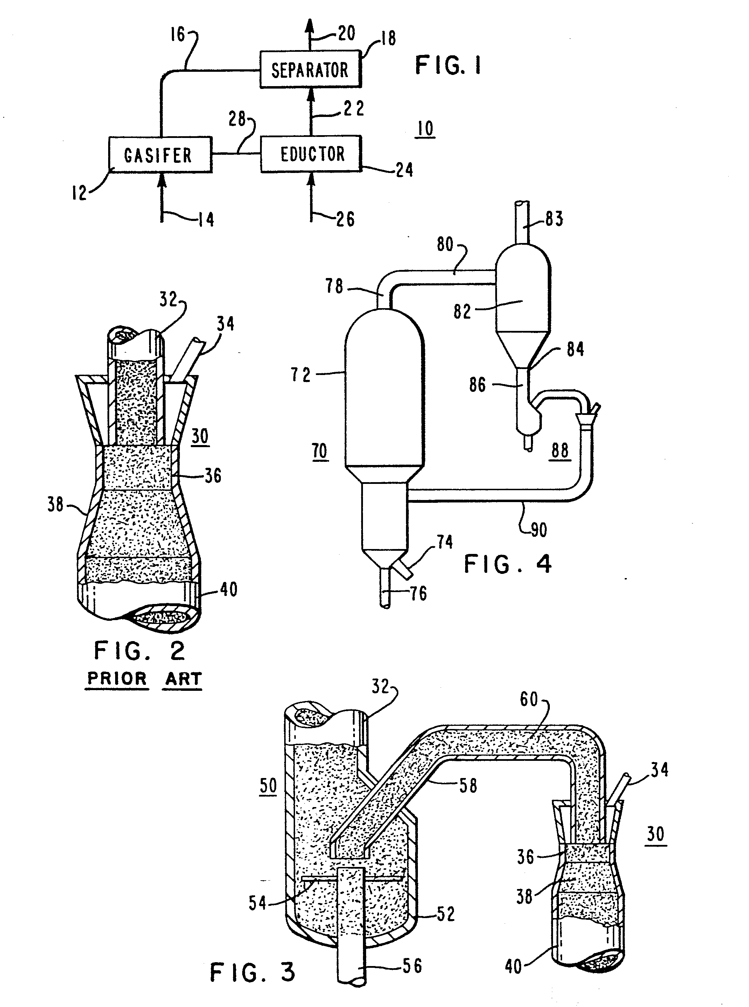

Referring now to Figure 1 there is shown a block diagram of a typical gasification system 10. Various feed streams such as steam, a source of oxygen such as air or pure oxygen, and a solid carbonaceous material in particle form are fed into a gasifier 12 by some feed means 14. Within the gasifier 12, which operates at temperatures typically between 871°C to 1093°C or higher, the carbonaceous material is partially combusted and partially gasified to form a gaseous discharge comprised of hydrogen, carbon monoxide and small particles of ash or ungasified carbon called char. These particles can be generically lumped together under the term "fines". The raw gas mixture is conveyed by a raw gas transfer line 16 to a separator 18 which may typically be of centrifugal cyclone variety. Within the separator 18, the gas is separated from the fines and discharged by a separator gas discharge 20. The separated fines fall by force of gravity through a standpipe 22 to some reinjection means 24, such as an eductor, for reinjecting the fines into the gasifier 12, using a motive gas from a gas source 26, through a fines return line 28. Due to the pressure losses in the raw gas transfer line 16, the separator 18 and the standpipe 22, the pressure at the base of the standpipe 22 is lower than the pressure in the gasifier 12. Accordingly, the reinjection means 24 must not only be capable of reinjecting fines over the pressure of the gasifier 12, but must also be capable of preventing discharge from the gasifier 12 of raw gas into the fines return line 28 in the event motive gas pressure is lost.

It is useful in the understanding of the invention if certain terminology is used. The term "voidage" refers to the ratio of gas volume to total volume in a volume of fluidized particles. For example, the voidage of 97% contains a very small amount of fluidized solids, where a voidage of 3% would contain a very large amount of solids. The term "incompressible" refers to the compressibility of the material. If a volume of material has a voidage of 97% that material is virtually all gas and is highly compressible as any gas would be. In a contrary manner, a material with 3% voidage would be virtually solid, would take on the nature of a solid and hence be virtually incompressible. A dense phase medium is one having a voidage of 62% or less. A dilute phase medium is one having a voidage of 94% or greater.

Looking now at Figure 2 there can be seen a typical solids eductor 30 in accordance with the state of the art which may be used in the system 10 set forth above. Particles from a separator 18 located above the eductor 30 fall into a standpipe 32. Motive gas is injected through a motive gas inlet 34 into a mixing length 36. This mixture of motive gas and particles moves into a diffuser 38 and thence into a particle return line 40. The entire eductor 30 acts in the manner of a nozzle using a motive gas of one pressure to entrain particles and transfer the particles to a region of pressure which is higher than the pressure of the unentrained particles.

Numerous problems can occur with this mode of operation. The first problem relates to design uncertainty. The design of the mixing section 36 and the diffuser 38 of solids eductors is an uncertain art, and the rapid acceleration of stationary packed solids to near sonic conditions is also a complex phenomenon. Since voidage in the solids entrance location can be as low as 30 to 33% and therefore relatively incompressible, the particulate stream cannot be considered to have the flow characteristics of a gas. Thus, a standard gas-gas ejector and associated principles may not be applicable.

A second problem occurs with respect to the flexibility of operation. An eductor is not suitable for certain types of materials which could easily pack together and clog, or "bridge" in a stagnant standpipe above the eductor. There is a moderate to high potential for pluggage in the standpipe 32 because of the low voidage (33%) and lack of compressibility. If this results in packing, a plug could form in the eductor 30 itself when this packed material is released into the mixing length 36. Once a plug begins to form, it can quickly seal the eductor 30. Even if only a partial plug forms in the eductor 30, the gas flow through the eductor 30 can be hindered and non-uniformly distributed in the mixing length 36 and diffuser 38.

A fourth problem relates to the interaction of the eductor 30 with the separator 18. The quantities of fines separated from the product gas by the separator 18 may well vary depending on transients within the gasifier 12. If there is no volume of fines backed up in the standpipe 32 then a variable quantity of fines might be drawn into the eductor 30. During those times when there are no fines in the standpipe 32, there is essentially no resistance to the action of the eductor 30 and uncontrollable amounts of gas can be drawn from the separator 18 by the vacuum created in the eductor 30. This obviously can adversely impact the separator collection efficiency. The only means of control of the eductor 30 is the variation of the motive gas. However, this is a fairly large gas flow, and accordingly may be difficult to fine tune accurately to match fines production variations. Further, it will have an effect on cyclone efficiency because of the differential pressure variations.

Referring now to Figure 3 there is shown a particulate solids sealing and injection system 50 in accordance with the invention. A standpipe 32 is attached to a seal pot 52. Aeration gas can be injected into the seal pot through a sparger ring 54. Transport gas is injected into the seal pot through a transport gas inlet 56. Particulate material, such as fines separated from the product gas of a carbonaceous material gasifier, are ejected from the seal pot 52 through the fines outlet 58 to the fines transfer line 60 and into an ejector 30, for conveyance to an area of higher pressure.

In operation, fines fall from a separator 18 into the standpipe 32 and thence into the seal pot 52. These fines can be fluidized by gas injected into the seal pot 52 from the sparger ring 54. Gas from a fines transport gas inlet 56 entrains the fluidized fines and injects them into the fines outlet 58. They are then carried through the fines transfer line 60 to the ejector 30. The quantity of fines which can be fluidized by the fines transport gas is proportional to the mass flow rate of the fines transport gas in the fines outlet 58. If the fines transport gas inlet 56 diameter is fixed, the mass flow rate of the gas can be changed by increasing the fines transport gas pressure. As a result, the total fines recycled back to the high pressure area can be varied simply by varying the pressure at the transport gas inlet 56. Alternatively, if the quantity of fines from the separator 18 is reduced, a lower differential pressure will be needed to convey the lower quantity of fines to the high pressure area. Since the pressure differential is related to the motive gas mass flow rate, reducing the motive gas flow will reduce the amount of fines conveyed.

It should be noted that in physical appearance the solids eductor 30 shown in Figure 2 and the gas ejector shown in Figure 3 are identical. The difference in terminology results from the fact that the eductor 30 shown in Figure 2 uses a motive gas to bulk particles. Thus it is termed an eductor. On the other hand, the ejector 30 shown in Figure 3 uses motive gas to eject gas conveyed from the seal pot 52. The fact that the gas ejected from the seal pot also contains entrained solids has a relatively small impact on the ejector 30 since the particle laden gas has a voidage of about 97% and therefore the compressibility and flow characteristics of a gas.

This system 50 provides several benefits over the prior art. Design certainty is enhanced by utilizing a seal pot 52 to first entrain the particles. Since the particle laden gas out of the seal pot 52 has a voidage of 97%, the stream entering the ejector 30 has compressibility and flow characteristics of a gas. Thus a standard gas-gas ejector 30 may be used, the characteristics of which are well known.

0231L

With respect to flexibility of operation, there are no restrictions placed on the type of particles because the system 50 has low to moderate potential for pluggage. Even if bridging occurs in the standpipe 32, all particles must eventually fall into the seal pot 52. These bridges are broken up and fluidized in the seal pot 52 resulting in the high voidage (97%) and compressibility features of the particle laden gas stream. Gas flow in the ejector 30 is not hindered and is thus uniformly distributed in the mixing length 36. Since solids are well dispersed, there is little likelihood of particle "backup" in the mixing length 36.

With respect to interactions with the separator there is minimal impact. Even if for some reason the seal pot 52 were to completely empty, there are still two additional sources of gas for the ejector 30 vacuum to draw from (the sparger ring 54 and fines transport inlet 56), and gas is preferentially drawn from these rather than the gas in the separator 18. Further, as will be discussed, controllability of this system 50 is greatly enhanced.

A further advantage of the system 50 over the state of the art is that if all motive gas pressure is lost, and the flow is reversed, the system will quickly seal. The fines will fill the standpipe 32 and seal pot 52 and will act as a seal to prevent backflow.

Referring now to Figure 4 there is shown a fluidized bed gasification system 70 in accordance with the invention comprising an elongated vessel 72. Penetrating the bottom of the vessel 72 is an ash discharge opening 74 and disposed through the bottom of the vessel 72 is a process mediums injection tube 76 for the injection of process mediums such as a carbonaceous material (for instance, coal particles), combustible gas, steam and a source of oxygen such as air or pure oxygen. Penetrating the top of the vessel 72 is a product gas discharge 78 and product gas discharge piping 80 connected to a centrifugal separator 82. The centrifugal separator 82 has two means of discharge, the first, at the top of the separator 82, is a product gas outlet 83 and the second, at the bottom of the separator 82, is the particle discharge 84. Attached to and physically below the particle discharge 84 is a particulate standpipe 86. Attached to the lower end of the standpipe 86 is a particulate solids sealing and injection means 88 substantially the same as that shown in Figure 3. Connecting the solids sealing and injection device 88 to the gasification vessel 72 is a fines reinjection line 90.

The operation of the gasification system 70 is as follows:

Various process mediums are injected into the vessel 72 through the injection tube 76. Within the vessel 72 the carbonaceous particles are supported in a fluidized bed by the continuous injection of various process mediums. In the presence of the oxygen and at the operating temperature of the gasification system 70, which is typically between 871°C and 1093°C or higher, a portion of the carbonaceous particles are combusted to provide heat for the continued operation of the gasification system 70. Over a period of time, the carbon contained in the particles reacts with the other process mediums and is gasified by the heat of combustion. The product gas is then discharged out of the vessel 72 through the product gas discharge 78. This gas, however, contains entrained fines and must be separated from the product gas before the product gas can be used. Consequently, the product gas is conveyed from the vessel 72 through the product gas discharge piping 80 into the centrifugal separator 82 which separates a high proportion of the fines from the product gas. The product gas is then discharged from the centrifugal separator 82 through the product gas outlet 83 and the fines are discharged through the fines discharge 84 and fall into the standpipe 86. These fines are then entrained by the solids sealing and injection device 88 and are conveyed through the fines reinjection line 90 to be reinjected into the gasification vessel 72 for further gasification.

The pressure in the gasification vessel 72 is normally assumed to be constant when, in fact, it is not. Because of various fluctuations in the process parameters and reactions the pressure within the vessel 72 may vary by plus or minus 69 k Pa from a nominal pressure of 1586 k Pa. Despite this fluctuation, the solids sealing and injection device 88 must continue to reinject fines. It has been determined by calculation that the optimum pressure increase across the ejector 30 (see Fig. 3) is 172 k Pa in the preferred embodiment. (This could also have been determined by experiment and direct observation.) Using the nominal parameters listed below, this pressure differential is achieved by a motive gas mass flow rate of 77 kg per hour.

Fines mass flow rate = 77 kg per hr.

Nozzle entrance velocity of the fines = 21 m per sec.

Fines temperature = 760°C

Nozzle exit velocity = 279 m per sec.

Motive gas temperature = 21°C

Transport gas mass flow rate = 13.1 kg per hr.

The cross-sectional area of the fines transfer line 60 and the fines return line 40 (in Fig. 3), 90 (in Fig. 4) are not critical, provided they are large enough to minimize any pressure loss across them.

0231L

0142364

50,853

As discussed earlier, reduced fines mass flow rates can be accommodated in different manners. For example, a reduction in the fines mass flow rate from 77 kg per hour from the separator 82 without a corresponding reduction in reinjection rate to the vessel 72 would lead eventually to a depletion of fines in the standpipe 86 with the end result that the solids sealing and injection device 88 could draw a vacuum in the separator 82, leading to a decrease in separator 82 efficiency. In order to maintain a relatively constant inventory of fines in the dip leg, it is desirable in this instance to reduce the amount of fines being reinjected to the vessel 72. This goal can be achieved by reducing or shutting off the transport gas mass flow rate from the fines transport gas inlet 56. Alternatively, if the solids mass flow rate is known to be lower than 77 kg per hour, the motive gas mass flow rate can be reduced to less than 77 kg per hour also. This reduction in motive gas mass flow will result in a lower differential pressure across the ejector 30 with a corresponding reduction in the amount of fines which will be reinjected into the vessel 72. Variation of the transport gas mass flow rate is the preferred method of control because its primary effect is only on solids mass flow rate.

What is claimed is:

1.  A solids particulate sealing and injection apparatus comprising

a vertical pipe (32) having a lower end,

a seal pot (52) attached flowingly to said pipe at said lower end, and

an ejector (30) comprising a particulate inlet (32), a motive gas source (34), a mixing length (36), a diffuser (38) and an ejector discharge (40);

characterized by

a sparger ring (54) disposed within said seal pot;

a transport gas inlet (56) disposed upwardly through said seal pot;

a seal pot outlet (58) disposed upwardly through said seal pot above said transport gas inlet; and

particulate conveying means (60) for conveying particulate from said outlet to said particulate inlet.

2.  A process for transferring solid particulate material from a region at a first pressure $P_1$ to a region of a second pressure $P_2$, wherein $P_2$ is greater than $P_1$, comprising the steps of:

a)  flowing said particulate from said region at pressure $P_1$ downwardly through a conduit (32) into a seal pot (52);

0231L

b) entraining said particulate upwardly out of said seal pot into a seal pot outlet (58);

c) flowing said entrained particulate to an ejector (30);

d) ejecting said entrained particulate to said region at pressure $P_2$.

3. The process in accordance with claim 2 characterized in that $P_2$ is greater than $P_1$ by 172 k Pa.

4. The process in accordance with claim 2 characterized in that said particles comprise fines from a carbonaceous material gasifier product gas.

5. The process in accordance with claim 2 characterized in that said ejector uses a motive gas mass flow rate of 77 kg per hour.

0231L

0142364

FIG. 1

SEPARATOR 18

GASIFER 12

EDUCTOR 24

10

FIG. 2
PRIOR ART

30

FIG. 3

FIG. 4

70